**Europäisches Patentamt**

**European Patent Office**

**Office européen des brevets**

(19)

(11) Numéro de publication: **0 086 259**
.A2

## (12) DEMANDE DE BREVET EUROPEEN

(21) Numéro de dépôt: **82110020.3**

(22) Date de dépôt: **29.10.82**

(51) Int. Cl.³: **G 01 F 1/36,** A 61 B 5/08, G 01 F 1/42

(30) Priorité: **13.11.81 CH 7311/81**

(43) Date de publication de la demande: **24.08.83 Bulletin 83/34**

(84) Etats contractants désignés: **BE CH DE FR GB IT LI NL SE**

(71) Demandeur: **Hamilton Bonaduz AG, Haus Nr. 64 a Postfach 26, CH-7402 Bonaduz (CH)**

(72) Inventeur: **Rochat, Jean-Denis, 126 Rt de St. Julien, CH-1228 Plan-les-Ouates (CH)**

(74) Mandataire: **Blum, Rudolf Emil et al, c/o E. Blum & Co Patentanwälte Vorderberg 11, CH-8044 Zürich (CH)**

(54) Procédé et dispositif pour déterminer un débit de gaz.

(57) Le dispositif comporte un orifice (20) traversé par un flux de gaz allant d'une chambre amont où règne une pression $P_1$ à une chambre aval où la pression est de $P_2$. Une vanne mobile (21) commandée électriquement laisse ouvert un passage triangulaire de surface déterminée par la position (h) de la vanne, mesurée par un potentiomètre (V.). A partir de cette mesure et de celle de la chute de pression $P_2-P_1$, un circuit électrique fournit un signal correspondant au débit du gaz. Ce signal peut être comparé à un signal de consigne, et la vanne commandée en rétroaction de manière à délivrer un débit prédéterminé, variant au besoin en fonction du temps.

TITRE MODIFIÉ
voir page de garde

- 1 -

Procédé pour déterminer le débit d'un gaz,
dispositif pour sa mise en oeuvre et
utilisation du procédé
------------------------------------------------

L'invention se rapporte à un procédé pour
déterminer le débit d'un gaz, ainsi qu'à un dispositif
pour la mise en oeuvre de ce procédé, et à une utilisation
du procédé pour la respiration artificielle. Celle-ci
exige des débits pouvant varier dans un très large
intervalle, ce qui rend impossible la calibration d'une
valve régulatrice du débit d'un gaz directement en fonction de son degré d'ouverture, tant à cause des turbulences dans la valve, qu'en raison de la forte non-linéarité d'une telle mesure. C'est pourquoi la calibration
des valves connues - c'est à dire la mesure du débit les
traversant pour un degré d'ouverture donné - est en
général réalisée par un débitmètre genre sonde de Fleisch,
venturi, débitmètre à fil chaud, à grille ou autre. Le
signal du débitmètre peut alors être comparé à un signal
consigne, et la différence entre ces deux signaux être
utilisée pour commander la valve de manière à obtenir un
débit déterminé. Un inconvénient de ces dispositifs réside
en l'étroite plage de débit pour laquelle leur erreur
relative reste acceptable.

Une solution-type parmi celles mesurant la
différence de pression qui existe entre l'amont et
l'aval d'un passage comparativement étroit prévu dans une conduite, pour évaluer le débit de gaz à travers celle-ci est le pneumotachographe du type de Fleisch. Au lieu d'un passage unique, il comporte de nombreux tubes étroits montés en parallèle, pour assurer un écoulement laminaire et éliminer l'influence des turbulences sur la mesure. La plage de mesure utilisable reste néanmoins étroite, sans parler des occlusions possibles des tubes minces par condensation d'humidité ou dépôt de mucosités, ce qui est presque prohibitif en usage clinique.

Une solution évitant ce dernier inconvénient est décrite dans le brevet U.S. 4.083.245, où la chute de pression entre les deux points de mesure est obtenue par un clapet élastique qui cède progressivement et s'ouvre de plus en plus lorsque le débit augmente. Ceci permet l'utilisation d'un seul passage, largement dimensionné et ne pouvant pratiquement pas être obstrué. Si les caractéristiques élastiques du clapet et sa forme géométrique sont bien choisies, le rapport entre un signal représentant la différence de pression et le débit restera raisonnablement linéaire pour une variation de débit d'environ 4:1, ce qui est insuffisant par exemple pour un appareil de respiration artificielle devant servir à des enfants et des adultes. De plus il est impératif que le clapet puisse céder librement sous l'action du flux de gaz, puisque toute la mesure en dépend. Il n'est donc pas possible de se servir du signal obtenu pour agir mécaniquement sur le clapet afin d'obtenir - par une boucle de rétro-action appropriée - un débit de gaz fixe ou variant de façon prédéterminée dans le temps.

Un autre inconvénient des systèmes connus est que leur erreur absolue reste en général constante, et croît même parfois, lorsque le débit mesuré décroît. Ceci conduit rapidement à des erreurs relatives inacceptables pour les faibles débits dans les applications nécessitant la détermination précise d'un débit à l'intérieur d'une large plage de valeurs.

Le but de l'invention est de remédier à cet inconvénient, et de permettre la régulation du débit d'un gaz avec une excellente précision relative, dans une très large plage de débit, et avec un temps de réponse très faible, ainsi que de permettre l'emploi d'un des principaux organes nécessaires à la mesure du débit pour réguler celui-ci, ce qui est un facteur d'économie et de fiabilité.

A cet effet, l'invention est définie comme il est dit dans les revendications 1, 6 et 13. Le procédé proposé permet d'engendrer un signal proportionel au débit sur une plage de valeurs pouvant varier de dans le rapport 300 : 1, avec une précision relative excellente, et approximativement constante sur toute la plage. Le signal peut être utilisé en rétro-action pour commander une vanne du dispositif de manière à obtenir un débit fixe ou variant en fonction d'autres paramètres, et ce avec une haute précision et un temps de réponse très court.

L'invention sera maintenant illustrée plus en détail par la description d'une forme de réalisation et à l'aide du dessin, dans lequel :

la fig. 1 illustre les principaux paramètres en question,

la fig. 2 représente schématiquement la partie mécanique d'un régulateur de débit, et

la fig. 3 montre une vue schématique éclatée d'une réalisation préférée de l'orifice de section variable.

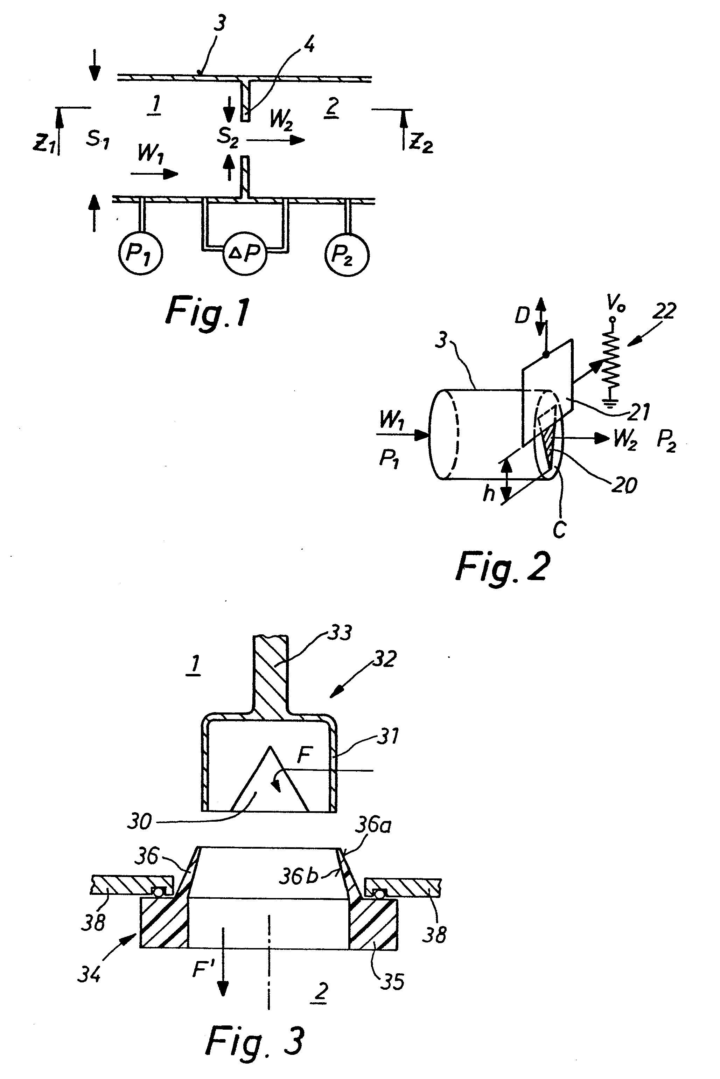

La figure 1 illustre les principaux paramètres intervenant dans le procédé proposé. Soit 3 une conduite dans laquelle passe le flux de gax à déterminer, conduite séparée en deux chambres 1 et 2 par une paroi 4 comportant un orifice de section $S_2$ petite par rapport à celle $S_1$ de la chambre amont. Soit par ailleurs $W_1$ et $W_2$ les vitesses d'écoulement du gaz dans la chambre amont 1 et en aval à proximité de l'orifice, $P_1$ et $P_2$ les pressions régnant en ces endroits, et $\Delta P$ la différence entre ces deux press-

ions. Si de plus $\rho$ désigne la densité du gaz traversant la conduite, $Z_1$ et $Z_2$ la hauteur d'un filet de gaz dans chacune des deux chambres, au-dessus d'un point de référence arbitraire, $W_1$, $W_2$ la vitesse d'écoulement de ce filet dans la chambre amont, respectivement en aval, à proximité de l'orifice, et g la constante de gravitation, alors l'équation de Bernouilli peut s'écrire:

$$P_1 + \rho \frac{W_1^2}{2} + \rho g Z_1 = P_2 + \rho \frac{W_2^2}{2} + \rho g Z_2$$

Les termes de cette équation comportant la constante de gravitation sont suffisamment petits et similaires pour pouvoir être négligés en pratique. De même la vitesse $W_1$ dans la chambre amont est négligeable par rapport à celle $W_2$ en aval de l'orifice et il est donc loisible de négliger le terme $\rho \dfrac{S_1^2}{2}$ dans le membre de gauche.

L'équation ci-dessus se réduit alors à :

$$P_1 - P_2 = \Delta P = \rho \frac{W_2^2}{2}$$

ou encore :

$$W_2 = \sqrt{\frac{2 \; \Delta P}{\rho}}$$

Si $S_1$, $S_2$ désignent les sections amont et aval, le débit $\overset{\bullet}{V}$, exprimé en volume par unité de temps, est donné par

$$\overset{\bullet}{V} = W_1 S_1 = W_2 S_2 \quad ,$$

$$\text{d'où :} \quad \overset{\bullet}{V} = S_2 \sqrt{\frac{2 \; \Delta P}{\rho}} \tag{1}$$

Or, pour un gaz parfait de constante r, à la pression P et à la température absolue T on a :

$$P = \rho \, r \, T$$

et l'équation (1) peut s'écrire :

$$\overset{\bullet}{V} = S_2 \sqrt{\frac{2 \; \Delta P \; r \; T}{P}} \qquad (2)$$

ou P serait la pression aval prise comme référence car elle est peu variable dans les cas considérés ici.

Si l'on admet que la température T reste pratiquement constante dans l'appareillage, l'équation (2) permet de ramener la mesure du débit à celle d'une surface $S_2$, facile à mesurer avec précision, et d'une différence de pression $\Delta P$ intervenant plus faiblement. Cette dernière mesure n'offre également pas de difficulté particulière, sauf au voisinage de zéro, où elle devient critique. Si le débit doit varier dans des proportions importantes, il est donc avantageux de travailler avec un $\Delta P$ sensiblement constant, ce qui est généralement le cas dans les applications à la respiration artificielle tant que la pression de la source reste sensiblement constante et largement supérieure à celle admissible du côté du patient. Il suffit alors de faire varier la section $S_2$ dans de larges proportions pour couvrir la plage désirée. Si, à l'intérieur de cette plage et pour la précision voulue, les variations de $\Delta P$ ne restent pas d'elles-mêmes suffisamment petites pour être négligées, il est possible soit de prévoir un capteur de pression différentiel capable de mesurer $\Delta P$ et de permettre ainsi l'application de la formule (2) à la détermination du débit, soit d'installer un dispositif maintenant und différence de pression suffisamment constante entre les chambres amont et aval pour que la valeur de $\overset{\bullet}{V}$ dans l'équation (2) ne dépend plus que de $S_2$. Dans tous les cas, il est important de pouvoir faire varier la section $S_2$ dans d'importantes proportions, et de connaître sa valeur avec une bonne précision relative pour tous les degrés d'ouverture. Dans ce but, il est utile de déterminer $S_2$

par une caractéristique progressive, c'est-à-dire au moyen d'une variable liée de façon non-linéaire, par exemple parabolique, à la valeur de la section $S_2$. Une telle relation existe, par exemple pour une vanne ressemblant au diaphragme d'un appareil de photo, entre sa section ouverte $S_2$ et le diamètre d de celle-ci :

$$S_2 = \frac{\pi}{4} d^2$$

Une vanne de ce genre pose toutefois quelques problèmes, telle une réalisation suffisamment étanche ne présentant pas trop de frottements internes.

De préférence, la section variable $S_2$, sera réalisée par un dispositif dont le schéma est esquissé à la fig. 2, et qui comporte une ouverture triangulaire 20 pouvant être obturée progressivement par une vanne 21 mobile transversalement à la conduite 3, à proximité immédiate de l'ouverture. L'orientation du triangle dans un plan parallèle à la vanne et par rapport au sens de déplacement de celle-ci (indiqué par la double flèche D) est telle qu'en position presque fermée la vanne laisse libre uniquement un sommet C du triangle. Si h désigne la hauteur, à partir de ce sommet, du passage triangulaire hachuré laissé libre par la vanne, et $\alpha$, $\beta$ les angles aux deux autres sommets du passage, la surface de celui-ci sera égale à :

$$S_2 = \frac{h^2}{2} (\text{ctg } \alpha + \text{ctg } \beta).$$

Cet agencement a donc une caractéristique parabolique, tout en étant d'une réalisation plus simple qu'un diaphragme circulaire. La position de la vanne (et donc la valeur de h) est mesurée par un capteur de position esquissé en 22, comprenant par exemple un rhéostat linéaire branché entre la masse et un potentiel V et dont le curseur est solidaire de la vanne 21. Ceci permet d'engendrer un signal analogique proportionel à h, à partir duquel $S_2$ sera calculé électroniquement. Si on le désire, la valeur de $S_2$ peut être rendue proportionelle à une puissance de h (c'est-à-dire finalement de la position de la vanne) supérieure à deux, en choisissant par exemple un triangle curviligne dans un plan parallèle à la vanne. Il est à noter toutefois, qu'avec une ouverture triangulaire la non-linéarité procure déjà un effet très bénéfique, puisque le débit varie environ de 1 à 100 pour une hauteur h ne variant que de 1 à 10.

L'organe de commande (non-représenté) agissant sur la vanne peut être un moteur pneumatique, hydraulique, ou un moteur rotatif (pas à pas ou non) suivi d'une vis micrométrique, ou très simplement un moteur électrodynamique dont la course est suffisante pour ouvrir et fermer la vanne.

La fig. 3 représente plus en détail une vue éclatée d'une forme d'exécution préférée de la vanne. En position de travail les deux pièces 32, 34 représentées séparément dans cette figure sont engagées l'une dans l'autre de manière à déterminer un ou plusieurs orifices triangulaires pour le passage du gaz, la surface de ces orifices dépendant de la profondeur de l'engagement des deux pièces. A cet effet une échancrure triangulaire 30 est ménagée dans la jupe cylindrique 31 de la pièce métallique supérieure 32, qui forme un piston creux à fond fermé et solidaire d'une tige 33. Pour des raisons d'équilibrage et d'usinage, plusieurs échancrures seront en général prévues, de préférence deux diamétralement opposées. En position de travail, la jupe 31 est au moins partiellement engagée dans la pièce inférieure, qui forme un anneau 34 composé d'un corps cylindrique 35 et d'une lèvre annulaire 36, formés d'une seule pièce. De préférence cet anneau sera fait d'un materiau à faible coefficient de frottement, tel les matières plastiques et en particulier le téflon additionné de bronze. Les flancs extérieur 36a et intérieur 36b de la lèvre sont tous deux légèrement coniques, le flanc intérieur faisant un angle d'environ 2$^{\circ}$ par rapport à l'axe de rotation, pour qu'il s'applique de façon étanche contre la jupe 31. Le flanc extérieur 36a est plus fortement conique, de manière à ce que la lèvre aille en s'effilant vers son bord libre, où son épaisseur se réduit à une fraction de millimètre, pour minimiser la friction. L'anneau 34 est appliqué de façon étanche contre une ouverture d'une paroi 38, et il est évident qu'une fois la jupe du piston 32 engagée dans l'anneau, l'espace situé au-dessus de la paroi 38 et celui situé au-dessous communiqueront par un ou plusieurs orifices triangulaires dont la surface varie comme le carré du déplacement du piston à partir de son point de fermeture totale. Dans une forme d'exécution préférée pour la respiration artificielle le déplacement du piston est obtenu par un moteur électrodynamique (non-représenté) agissant sur la tige 33 et procurant avec un minimum d'inertie ainsi que d'usure les quelques millimètres de course nécessaires. Grâce à la relation non-linéaire entre déplacement et section libre, cette petite course est suffisante pour couvrir toute la plage allant du dosage très exact (en valeur absolue) de grands débits, à celui (encore assez exact en valeur relative) de débits plusieurs centaines de fois plus petits.

Le procédé et le dispositif proposés ici sont particulièrement adaptés à la respiration artificielle dans le cas de l'insufflation d'un gaz ou d'un mélange gazeux dans un malade. On a dans ce cas des débits devant varier de 10 ml/s pour un enfant jusque'à 3'000 ml/s pour un adulte, ceci selon un profil de débit d'inspiration déterminé en fonction du temps (préprogrammé dans une mémoire PROM par exemple), profil carré, triangulaire progressif, triangulaire régressif, 1/2 sinus etc., à fréquence et amplitude variables dans de larges mesures (dynamique). Le système permet de travailler en feedback de pression par exemple pour la CPAP (pression positive continue des voies respiratoires) bien connue des praticiens de la respiration artificielle, avec un signal de consigne de pression constant, tout en mesurant avec précision les vagues de débit inspiré.

D'autre part, la valeur de P dans l'équation (2) ne sortira guère de l'intervalle 1000 - 1050 mbar, rendant son  influence sur la mesure de débit très faible à négligeable. Une remarque similaire vaut pour T. Pour certaines applications à la respiration artificielle une bonne précision peut aussi être obtenue en basant la mesure de débit uniquement sur une mesure de la position de la vanne obturatrice, lorsque $P_1$ est maintenu constant et assez grand par rapport à la pression $P_2$ du côté du patient pour que les variations possibles de cette dernière aient suffisamment peu d'influence sur $\Delta P$.

- 1 -

Revendications

1. Procédé pour déterminer le débit d'un gaz, caractérisé en ce qu'on mesure le degré d'ouverture momentané d'au moins un orifice de section variable S traversé par le gaz, qu'on mesure la différence du pression $\Delta P$ entre les côtés amont et aval de cet orifice, et qu'on évalue le débit de gaz $\overset{\bullet}{V}$ traversant l'orifice au moyen de la formule

$$\overset{\bullet}{V} = \zeta\, S \sqrt{\frac{2\,\Delta P\; r\; T}{P}} \quad ,$$

où $\zeta$ est le coefficient de contraction de la section étranglée, r la constante du gaz,

T sa température absolue, et

P la valeur de la pression aval.

2. Procédé selon la revendication 1, caractérisé en ce que le degré d'ouverture est mesuré par détermination d'une dimension linéaire de la section libre de l'orifice, cette dimension étant choisie de manière à varier au plus comme la racine carrée de ladite section libre.

3. Procédé selon une des revendications 1 et 2, caractérisé en ce qu'on évalue le débit de gaz au moyen d'un circuit électronique analogique ou digital dont un signal d'entrée est donné par la mesure du degré d'ouverture de l'orifice.

4. Procédé selon la revendication 3, caractérisé en ce qu'un second signal d'entrée est donné par la mesure de la différence de pression $\Delta P$.

5. Procédé selon la revendication 4, caractérisé en ce qu'un troisième signal d'entrée est donné par une mesure délivrant une valeur de la pression aval P.

6. Dispositif pour la mise en oeuvre du procédé selon la revendication 1, caractérisé en ce qu'il comporte deux chambres séparées par un orifice dont l'ouverture peut être obturée progressivement par une vanne mobile sensiblement transversalement au flux de gaz passant d'une chambre à l'autre.

7. Dispositif selon la revendication 6 pour la mise en oeuvre du procédé selon la revendication 2, caractérisé en ce que l'orifice possède une forme telle que sa surface libre restante lorsqu'elle est partiellement obturée par la vanne varie plus rapidement que le chemin parcouru par la vanne à partir de sa position au moment de sa fermeture complète, et en ce que le dispositif comporte un moyen pour mesurer électriquement ce chemin.

8. Dispositif selon la revendication 7, caractérisé en ce que l'orifice forme un triangle rectiligne ou curviligne, la vanne étant agencée pour atteindre un sommet du triangle au moment de la fermeture complète.

9. Dispositif selon une des revendications 7 ou 8, caractérisé par une vanne dont la surface travaillante est cylindrique et glisse sur une surface également cylindrique, dans laquelle est ménagé l'orifice.

10. Dispositif selon une des revendications 6 à 9, pour la mise en oeuvre du procédé selon une des revendications 4 ou 5, caractérisé par un capteur de pression différentiel mesurant la différence de pression entre les deux chambres.

11. Dispositif selon une des revendications 6 à 10, caractérisé par une unité de calcul électronique agencée pour calculer le débit $\dot{V}$ à partir de signaux électriques représentant la valeur mesurée d'au moins un des paramètres suivants: S, ΔP, P, T.

12. Dispositif selon une des revendications 1 à 11, caractérisé en ce que l'orifice est formé par un ou plusieurs passages délimités par les bords de lumières pratiqués dans un cylindre et dans un piston engagé dans celui-ci de façon sensiblement étanche et/ou par les bords d'attaque de ces deux éléments mobiles l'un par rapport à l'autre de manière que leur position relative détermine la surface passante de l'orifice.

13. Utilisation du procédé selon la revendication 1 pour le contrôle du débit de gaz insufflé et/ou expiré pendant la respiration artificielle.

14. Utilisation selon la revendication 13, caratérisée en ce qu'on utilise un pression amont sensiblement constante et supérieure d'au moins 100 mbar à la pression maximale existant en aval, du côté du patient.

15. Utilisation selon une des revendications 13 et 14, caractérisée en ce qu'on utilise en rétroaction un signal électrique correspondant au débit de gaz évalué, pour varier le degré d'ouverture de l'orifice de manière à maintenir ce débit égal à une valeur de consigne fonction du temps.

*Fig.1*

*Fig.2*

*Fig. 3*